Europäisches Patentamt

European Patent Office

Office européen des brevets

(19)

(11) Veröffentlichungsnummer: **0 237 757**
**A2**

## (12) EUROPÄISCHE PATENTANMELDUNG

(21) Anmeldenummer: 87101641.6

(22) Anmeldetag: 06.02.87

(51) Int. Cl.⁴: **C08L 83/08** , C08L 83/07 , C09D 3/82

(30) Priorität: 06.02.86 DE 3603738

(43) Veröffentlichungstag der Anmeldung:
23.09.87 Patentblatt 87/39

(84) Benannte Vertragsstaaten:
AT BE CH DE FR GB IT LI NL

(71) Anmelder: WACKER-CHEMIE GMBH
Prinzregentenstrasse 22
D-8000 München 22(DE)

(72) Erfinder: Müller, Johann
Friedrich-Ebert-Strasse 3
D-8263 Burghausen(DE)
Erfinder: Preiner, Gerhard, Dr. Dipl.-Chem.
Karl-Gross-Strasse 17
D-8263 Burghausen(DE)
Erfinder: Trieschmann, Christa, Dr.
Dipl.-Chem.
Stadtplatz 95/96
D-8263 Burghausen(DE)

(54) **Durch Strahlung zu Elastomeren vernetzbare Massen.**

(57) In den neuen durch Strahlung zu Elastomeren vernetzbare Massen auf Grundlage von (a) Organopolysiloxan mit Triorganosiloxaneinheiten der Formel

$$H_2C = CHCXOR^1SiR_2O_{1/2},$$

worin R gleiche oder verschiedene, einwertige Kohlenwasserstoffreste, die halogeniert sein können, $R^1$ gleiche oder verschiedene zweiwertige Kohlenwasserstoffreste, die halogeniert sein können, und X Sauerstoff oder Schwefel bedeutet, während die anderen Siloxaneinheiten als diese Triorganosiloxaneinheiten mindestens zu 80 % ihrer Anzahl Diorganosiloxaneinheiten sind, deren SiC-gebundenen organischen Reste beide einwertige Kohlenwasserstoffreste sind, die halogeniert sein können, (b) Füllstoff mit einer Spezifischen Oberfläche von mindestens 50 m²/g und gegebenenfalls (c) Photoinitiator, enthält Organopolysiloxan (a) zusätzlich zu den vorstehend genannten Siloxaneinheiten auch Siloxaneinheiten der Formel

$$HSR^1SiRO,$$

worin R und $R^1$ jeweils die oben dafür angegebene Bedeutung haben.

## Durch Strahlung zu Elastomeren vernetzbare Massen

Aus EP-OS 15 21 79 (ausgegeben 21. August 1985, Loctite Corporation) sind durch Ultraviolett-Licht vernetzbare Massen auf Grundlage von (a) Organopolysiloxan mit eine Acryloxygruppe aufweisenden Triorganosiloxaneinheiten der Formel

$$H_2C = CHCOOR''SiR'_2O_{1/2},$$

worin R' gleiche oder verschiedene, einwertige Kohlenwasserstoffreste und R'' gleiche oder verschiedene, zweiwertige Kohlenwasserstoffreste bedeutet, während die anderen Siloxaneinheiten als diese Triorganosiloxaneinheiten mindestens zu 80 % ihrer Anzahl Diorganosiloxaneinheiten sind, deren SiC-gebundenen organischen Reste beide einwertige Kohlenwasserstoffreste sind, (b) Füllstoff mit einer Spezifischen Oberfläche von mindestens 50 m²/g und (c) Photoinitiator bekannt.

Es ist Aufgabe der Erfindung, durch Strahlung zu Elastomeren vernetzbare Massen auf Grundlage von (a) Organopolysiloxan mit Triorganosiloxaneinheiten, die solche der oben angegebenen Formel sein können, (b) Füllstoff mit einer Spezifischen Oberfläche von mindestens 50 m²/g und gegebenenfalls (c) Photoinitiator bereitzustellen, deren Vernetzung durch Strahlung, insbesondere Ultraviolett-Licht, besonders rasch und bei Raumtemperatur erfolgt und die bei der Vernetzung Elastomere mit besonders guten Werten bei physikalischen Prüfverfahren, z.B. mit besonders hoher Reißfestigkeit, ergeben. Diese Aufgabe wird durch die Erfindung gelöst.

Gegenstand der Erfindung sind durch Strahlung zu Elastomeren vernetzbare Massen auf Grundlage von (a) Organopolysiloxan mit Triorganosiloxaneinheiten der Formel

$$H_2C = CHCXOR'SiR_2O_{1/2},$$

worin R gleiche oder verschiedene, einwertige Kohlenwasserstoffreste, die halogeniert sein können, R' gleiche oder verschiedene, zweiwertige Kohlenwasserstoffreste, die halogeniert sein können, und X Sauerstoff oder Schwefel bedeutet, während die anderen Siloxaneinheiten als diese Triorganosiloxaneinheiten mindestens zu 80 % ihrer Anzahl Diorganosiloxaneinheiten sind, deren SiC-gebundenen organischen Reste beide einwertige Kohlenwasserstoffreste sind, die halogeniert sein können, (b) Füllstoff mit einer Spezifischen Oberfläche von mindestens 50 m²/g und gegebenenfalls (c) Photoinitiator, dadurch gekennzeichnet, daß Organopolysiloxan (a) zusätzlich zu den vorstehend genannten Siloxaneinheiten auch Siloxaneinheiten der Formel

$$HSR'SiRO,$$

worin R und R' jeweils die oben dafür angegebene Bedeutung haben, enthält.

Vorzugsweise enthalten die Organopolysiloxane (a) durchschnittlich 0,1 bis 5, noch bevorzugter 0,1 bis 3 und besonders bevorzugt 0,1 bis 0,9 Siloxaneinheiten der Formel

$$HSR'SiRO$$

wobei R und R' jeweils die oben dafür angegebene Bedeutung haben, je Rest der Formel

$$H_2C = CHCXOR'-.$$

Vorzugsweise sind die Organopolysiloxane (a) solche der Formel (I)

$$H_2C = CHCXOR'SiR_2O(SiR_2O)_m(HSR'SiRO)_n-(SiRR^2O)_pSiR_2R'OXCHC = CH_2,$$

worin R, R' und X jeweils die oben dafür angegebene Bedeutung haben, R² Wasserstoff oder einen Rest der Formel

$$H_2C = CHCXOR'-,$$

worin R' die oben dafür angegebene Bedeutung hat, b edeutet, m eine ganze Zahl im Wert von mindestens 10 ist, n 0 oder eine ganze Zahl im Wert von mindestens 1 ist, p 0 oder eine ganze Zahl im Wert von mindestens 1 ist und die Summe von m + n + p eine Zahl ist, die einer durchschnittlichen Viskosität vom Organopolysiloxan (a) von 10 mm².s⁻¹ bei 25°C bis 50 000 mPa.s bei 25°C entspricht, mit den Maßgaben, daß m mindestens 80 % der Summe von m + n + p beträgt und daß durchschnittlich 0,1 bis 5, bevorzugt 0,1 bis 3 und besonders bevorzugt 0,1 bis 0,9 Siloxaneinheiten der Formel

$$HSR'SiRO$$

je Rest der Formel

$$H_2C = CHCXOR'-$$

vorliegen.

Wie aus den obigen Angaben ersichtlich, daß n auch 0 sein kann, aber Siloxaneinheiten der Formel

$$HSR'SiRO$$

im Organopolysiloxan (a) vorliegen müssen, kann es sich beim Organopolysiloxan z.B. um solches der Formel (I), worin n mindestens 1 ist, oder um Gemische aus mindestens einem Organopolysiloxan vorzugsweise der Formel (I), worin n 0 ist, und Organopolysiloxan vorzugsweise der Formel (I), worin n mindestens 1 ist, handeln.

Obwohl durch die oben angegebene Formel (I) für bevorzugtes Organopolysiloxan (a), wie bei derartigen Formeln üblich, nicht dargestellt, können zusätzlich zu den darin angegebenen Siloxaneinheiten bis zu insgesamt 5 Molprozent, bezogen auf das gesamte Molekül bzw. die gesamten Moleküle dieser Art, andere, jedoch meist lediglich als mehr oder weniger schwer vermeidbare Verunreinigungen vorliegende Siloxaneinheiten, wie solche der Formel $R_3SiO_{1/2}$, $RSiO_{3/2}$, wobei R jeweils die oben dafür angegebene Bedeutung hat, oder $SiO_{4/2}$, vorhanden sein.

Vorzugsweise ist die Summe von m + n + p eine Zahl, die einer durchschnittlichen Viskosität vom Organopolysiloxan (a) von 100 $mm^2.s^{-1}$ bei 25°C bis 20 000 mPa.s bei 25°C entspricht.

Vorzugsweise ist X Sauerstoff.

Vorzugsweise enthalten die SiC-gebundenen einwertigen Kohlenwasserstoffreste im Organopolysiloxan (a) und damit die Kohlenwasserstoffreste R in Formel (I) höchstens 18 Kohlenstoffatome je Rest. Beispiele für solche Kohlenwasserstoffreste R sind Alkylreste, wie der Methyl-, Ethyl-, n-Propyl-, Isopropyl-, n-Butyl und sec.-Butylrest sowie Octadecylreste; Cycloalkylreste, wie der Cyclohexylrest und Methylcyclohexylreste; Reste mit mindestens einer aliphatischen Kohlenstoff-Kohlenstoff-Doppelbindung, wobei diese Reste aus Kohlenstoff-und Wasserstoffatomen als einzigen Atomen aufgebaut sind, wie der Vinyl-und Allylrest; Arylreste, wie der Phenylrest und Xenylreste; Alkarylreste, wie Tolylreste; und Aralkylreste, wie der Benzyl-und beta-Phenylethylrest.

Beispiele für SiC-gebundene halogenierte einwertige Kohlenwasserstoffreste im Organopolysiloxan (a) und damit für halogenierte Kohlenwasserstoffreste R in Formel (I) sind der 3-Chlorpropyl-und der 3,3,3-Trifluorproplyrest sowie o-, p-und m-Chlorphenylreste. Auch die SiC-gebundenen halogenierten einwertigen Kohlenwasserstoffreste im Organopolysiloxan (a) und damit die halogenierten Kohlenwasserstoffreste R in Formel (I) enthalten vorzugsweise höchstens 18 Kohlenstoffatome je Rest.

Vorzugsweise sind schon wegen der leichteren Zugänglichkeit mindestens 95 % der Anzahl der SiC-gebundenen, einwertigen Kohlenwasserstoffreste im Organopolysiloxan (a) und damit der Reste R in den oben angegebenen Formeln Methylreste, wobei sich dieses 95 % auf die Gesamtzahl der SiC-gebundenen, einwertigen Kohlenwasserstoffreste, ob halogeniert oder nichthalogeniert, bezieht.

Vorzugsweise ist $R^1$ ein Rest der Formel

$$-(CH_2)_r -,$$

worin r eine ganze Zahl im Wert von 1 bis 6, insbesondere 3 ist.

Folglich sind im Organopolysiloxan (a) und damit in der Formel (I) als Triorganosiloxaneinheiten der Formel

$$H_2C = CHCXOR^1SiR_2O_{1/2}$$

solche der Formel

$$H_2C = CHCOO(CH_2)_3Si(CH_3)_2O,$$

als Siloxaneinheiten der Formel

$$HSR^1SiRO$$

solche der Formel

$$HS(CH_2)_3Si(CH_3)O$$

und allgemein als Reste der Formel

$$H_2C = CHCXOR^{1-}$$

solche der Formel

$$H_2C = CHCOO(CH_2)_3-$$

besonders bevorzugt.

$R^1$ kann aber auch z.B. ein verzweigter Alkylenrest, wie solcher der Formel

$$-CH_2CH(CH_3)CH_2-oder$$

$$CH_2CH(CH_3)-,$$

Phenylreste, Alkarylenreste, wie solche der Formel

$$-(CH_2)C_6H_4-,$$

oder Aralkylenreste, wie Tolylenreste, sein.

Beispiele für halogenierte Reste $R^1$ sind o-, p-und m-Chlorphenylreste.

Vorzugsweise enthalten auch die Reste $R^1$ höchstens 18 Kohlenstoffatome je Rest.

Organopolysiloxane (a) der erfindungsgemäß verwendeten Art, worin n mindestens 1 ist, sind bereits bekannt, nämlich aus DE-OS 34 02 317 -(offengelegt 25. Juli 1985, Wacker-Chemie GmbH).

Organopolysiloxane, worin n 0 ist, wie sie in den Organopolysiloxanen (a) zusätzlich vorliegen können, sind ebenfalls bereits bekannt, nämlich z.B. aus der eingangs genannten EP-OS. Es war jedoch keiner der Druckschriften zu entnehmen, daß die erfindungsgemäßen Massen bei Vernetzung Elastomere mit z.B. besonders hoher Reißfestigkeit ergeben würden.

Als Füllstoff (b) ist Siliciumdioxyd mit einer Spezifischen Oberfläche von mindestens 50 m²/g besonders bevorzugt. Es kann sich dabei um pyrogen erzeugtes Siliciumdioxyd, unter Erhaltung der Struktur entwässerte Kieselsäurehydrogele, also um sogenannte "Aerogele", oder andere Arten von gefälltem Siliciumdioxyd mit einer Spezifischen Oberfläche von mindestens 50 m²/g oder um Gemische aus mindestens zwei derartiger Siliciumdioxydarten handeln. Das Siliciumdioxyd kann hydrophil oder, weil es z.B. mit einer hydrophobierenden Organosiliciumverbindung, wie Trimethylethoxysilan, Dimethyldichlorsilan, Octamethylcyclotetrasiloxan oder Hexamethyldisilazan, gegebenenfalls in einer Kugelmühle, behandelt wurde, hydrophob sein. Besonders bevorzugt ist durch Behandlung mit Hexamethyldisilazan hydrophobiertes Siliciumdioxyd mit einer Spezifischen Oberfläche von mindestens 100 m²/g.

Die hier in Beschreibung und mindestens einem der Patentansprüche angegebenen Werte für Spezifische Oberflächen sind BET-Werte, also Werte, die durch Stickstoffadsorption gemäß ASTM Special Technical Publication, No. 51, 1941, Seite 95 ff., bestimmt werden.

Vorzugsweise enthalten die erfindungsgemäßen Massen Füllstoff (b) in Mengen von 5 bis 50 Gewichtsprozent, insbesondere 15 bis 35 Gewichtsprozent, jeweils bezogen auf das Gesamtgewicht der jeweiligen Masse.

Bei der Strahlung, unter deren Einwirkung die erfindungsgemässen Massen zu Elastomeren vernetzt werden, kann es sich um Elektronenstrahlung, gamma-, Röntgenstrahlung oder, was bevorzugt ist, je nach Aktivität des jeweils in ihnen vorhandenen Photoinitiators (c) um Tageslicht, Licht mit einer Wellenlänge von 400 bis 600 nm, also sogenanntes "Halogenlicht", oder Ultraviolettlicht, oder ein Gemisch aus mindestens zwei derartiger Bestrahlungsarten, insbesondere aus mindestens zwei derartiger Lichtarten handeln. Licht mit einer Wellenlänge von 200 bis 300 nm ist besonders bevorzugt. Das Ultraviolett-Licht kann z.B. in Xenon-, Quecksilberniederdruck-, Quecksilbermitteldruck- oder Quecksilberhochdrucklampen erzeugt werden.

Wenn die erfindungsgemäßen Massen durch mindestens eine der oben angegebenen Lichtarten vernetzt werden sollen, müssen sie Photoinitiator (c) enthalten. Dabei können die erfindungsgemäßen Massen beliebige Photoinitiatoren enthalten, die in durch Licht vernetzbaren Zusammensetzungen vorliegen können. Es wird angenommen, daß es sich bei den Photoinitiatoren um Verbindungen handelt, die bei Bestrahlung mit mindestens einer der oben angegebenen Lichtarten in Radikale zerfallen und dadurch die Vernetzung durch die Bestrahlung fördern. Beispiele für Photoinitiatoren (c) sind Antrachinon und substituierte Antrachinone, wie Chlorantrachinon, Benzophenon und substituierte Benzophenone, wie Hydroxybenzophenone, Xanthon und substituierte Xanthone, Acetophenon und substituierte Acetophenone, wie 2-Hydroxy-2-methyl-1-phenylpropan-1-on, Benzoin und substituierte Benzoine, wie Benzoinalkylether, Benzoine, in denen das Wasserstoffatom der Hydroxylgruppe des Benzoins durch ein Siliciumatom eines cyclischen Organopolysiloxans ersetzt ist, wie sie in DE-OS 31 23 676 (offengelegt 8. April 1982, Shin-Etsu Chemical Co., Ltd.) beschrieben sind, und Benzoin-Derivate, die durch Umsetzung von z.B. Benzoin mit z.B. Triethanolamin in Abwesenheit von direkt an Silicium gebundenem Halogen, von Säure, die saurer ist als Benzoin und von Base, die basischer ist als Triethanolamin, erhältlich sind, Thioxanthon und substituierte Thioxanthone, Benzil und substituierte Benzile, wie Benzilketale, Fluorenon und substituierte Fluorenone. Zusätzlich zu den bereits genannten einzelnen Beispielen für Photoinitiatoren (c) seien als weitere einzelne Beispiele für Photoinitiatoren (c) genannt: 2,4-Bis-(trimethylsiloxy)-benzophenon, Trichlorbutylacetophenon, Mesityloxyd, Propiophenon, Benzaldehyd, Carbazol, 3-Methylaceto phenon, 4-Methylacetophenon, 3-Bromacetophenon, 4-Methylbenzophenon, 4-Chlorbenzophenon, 4,4'-Dimethoxybenzophenon, 4-Chlor-4'-benzylbenzophenon,3-Chlorxanthon, 3,9-Dichlorxanthon, 3-Chlor-8-nonylxanthon, Michler's Keton und Benzoinmethylether.

Unter den Photoinitiatoren (c) sind solche bevorzugt, die im Organopolysiloxan (a) löslich sind, was sich durch einfache Handversuche leicht feststellen läßt.

Vorzugsweise enthalten die erfindungsgemäßen Massen, wenn sie durch mindestens eine der oben angegebenen Lichtarten vernetzt werden sollen, Photoinitiator (c) in Mengen von 0,05 bis 10 Gewichtsprozent, insbesondere 0,5 bis 6 Gewichtsprozent, jeweils bezogen auf das Gesamtgewicht der jeweiligen Masse.

Zusätzlich zu den wesentlichen Bestandteilen (a) und (b) sowie gegebenenfalls (c) können die erfindungsgemäßen Massen, falls erwünscht, weitere Stoffe enthalten, wie sie auch bisher in durch Strahlung, insbesondere durch Licht vernetzbaren Massen zusätzlich zu anderen Stoffen vorliegen konnten. Beispiele für derartige zusätzliche Stoffe sind Füllstoffe mit einer spezifischen Oberfläche von weniger als 50 m²/g, wie Quarzmehl, Kreidepulver oder Diatomeenerde, wobei auch diese Füllstoffe hydrophil oder hydrophob sein können, organische Farbstoffe, insbesondere solche, welche die Wirkung von Photoinitiatoren fördern, weil sie -

(die Farbstoffe) Absorptionsmaxima im Bereich von 300 bis 800 nm aufweisen, wie Nitrazingelb, Disperse Orange 3, Nilblau A, Zusätze zur Verhinderung von thermischer Vernetzung, Alterungsschutzmittel, und Mittel zur Verbesserung der Haftung der vernetzten Organopolysiloxane auf den Unterlagen, auf denen sie erzeugt wurden wie Butandioldiacrylsäureester und gamma-Glycidoxypropyltriacetoxysilan und Organopolysiloxan der Formel (I), worin m jedoch eine ganze Zahl von 0 bis 9 ist.

Farbstoffe, welche die Wirkung von Photoinitiatoren fördern, werden vorzugsweise in Mengen von 10 bis 1000 Gewichts-ppm, insbesondere 10 bis 100 Gewichts-ppm, jeweils bezogen auf das Gesamtgewicht der jeweiligen Masse, eingesetzt.

Die Herstellung der erfindungsgemäßen Massen kann durch einfaches Vermischen ihrer Bestandteile erfolgen. Flüchtige Bestandteile können aus diesen Massen durch Erniedrigen des Drucks auf z.B. 1 hPa (abs.) nach dem Vermischen entfernt werden.

Die erfindungsgemäßen Massen können überall dort eingesetzt werden, wo durch Licht zu Elastomeren vernetzende Massen eingesetzt werden können, beispielsweise zur Herstellung von Beschichtungen, z.B. von Textilien aus organischen Fasern oder von Glasfasern, einschließlich Lichtleitfasern; von Formteilen, wie O-Ringen, zur Herstellung von Dichtungen, einschließlich sogenannter "formed in press gaskets", solange Lichtzutritt z.B. durch ein Fenster, z.B. aus Fensterglas zu der zu vernetzenden Masse gesichert ist, zur Herstellung von Folien und Membranen, zur Herstellung von Isolierungen von elektrischen Leitungsdrähten, zum Einbetten von elektrischen Bauteilen, wie Hybridschaltkreisen z.B. für elektronische Zündungen, von Modulen, photovoltaischen Solargeneratoren und anderen Halbleiteranordnungen.

Anwendungen mit Schichtdicken von 0,5 mm bis 2 cm, insbesondere 0,2 bis 2 cm, sind bevorzugt.

Herstellung von in den folgenden Beispielen verwendeten Organopolysiloxanen:

A) Eine Mischung aus 60 g eines Mischpolymerisats aus 29 Mol des Silans der Formel

$(CH_3)_2SiCl_2$

und 1 Mol des Silans der Formel

$HS(CH_2)_3Si(CH_3)(OCH_3)_2$,

das in den endständigen Einheiten je eine Si-gebundene Hydroxygruppe enthält, 20 g des Organopolysiloxans der Formel (II)

$H_2C = CHCOO(CH_2)_3Si(CH_3)_2[Si(CH_3)_2O]_9Si(CH_3)_2-(CH_2)_3OOCCH = CH_2$

580 g in den endständigen Einheiten je eine Si-gebundene Hydroxylgruppe aufweisendem Dimethylpolysiloxan mit durchschnittlich 100 Si-Atomen je Molekül und 68 g Toluol wird nach Vermischen mit 0,3 ml einer 25 gewichtsprozentigen Lösung von Phosphornitridchloriden in Methylenchlorid 2 Stunden zum Sieden unter Rückfluß erwärmt. Das dabei gebildete Wasser wird in einer Dean-Stark-Falle aufgefangen. Dann werden die Phosphornitridchloride durch Zugabe von 0,5 g Triisononylamin unwirksam gemacht. Danach wird die Lösung mit Hilfe von Aktivkohle und Diatomeenerde filtriert und aus dem Filtrat werden die bis zu 80°C bei 100 Pa (abs.) siedenden Bestandteile abdestilliert. Das in einer Ausbeute von 614 g (93 Gewichtsprozent d.Th.) erhaltene klare, farblose Öl hat eine Viskosität von 6000 mPa.s bei 25°C. Es enthält aufgrund des Kernresonanzspektrums durchschnittlich 520 Dimethylsiloxaneinheiten und eine $HS(CH_2)_3Si(CH_3)O$-Einheit je Molekül. Es ist im verschlossenen und undurchsichtigen Behälter bei Raumtemperatur mindestens 6 Monate lagerfähig.

B) Die vorstehend beschriebene Arbeitsweise wird wiederholt mit folgenden Abänderungen:
Anstelle von 60 g des Mischhydrolysates mit Mercaptopropylgruppen werden 380 g dieses Mischhydrolysates verwendet.
Anstelle der 20 g des Organopolysiloxans der Formel (II) werden 60 g dieses Organopolysiloxans verwendet.
Anstelle der 580 g des in den endständigen Einheiten je eine Si-gebundene Hydroxylgruppe aufweisenden Dimethylpolysiloxans werden 376 g dieses Dimethylpolysiloxans und anstelle der 68 g Toluol werden 140 g Toluol verwendet.

Das in einer Ausbeute von 750 g (92 Gewichtsprozent d.Th.) erhaltene klare, farblose Öl hat eine Viskosität von 700 mPa.s bei 25°C. Es enthält aufgrund des Kernresonanzspektrums durchschnittlich 150 Dimethylsiloxaneinheiten und eine $HS(CH_2)_3Si(CH_3)O$-Einheit je Molekül. Es ist im verschlossenen und undurchsichtigen Behälter mindestens 6 Monate lagerfähig.

C) Zu 116 g (2 Mol) Allylalkohol und 4,6 ml einer 1-Gewichtsprozentigen Lösung von Platin in Form von $H_2PtCl_6.6H_2O$ in Isopropanol, die in einem 2-l-Dreihalskolben auf 80°C erwärmt sind, werden 800 g (1 Mol) in den endständigen Einheiten je ein Si-gebundenes Wasserstoffatom enthaltendes Organopolysiloxan der Formel
$HSi(CH_3)_2O[Si(CH_3)_2]_9Si(CH_3)_2H$

tropfenweise gegeben. Anschließend wird eine Stunde bei 100°C gerührt. nachdem sich das so erhaltene Orgnaopolysiloxan, das aufgrund des Kernresonanzspektrums die Formel

$$HO(CH_2)_3Si(CH_3)_2O[Si(CH_3)_2O]_9Si(CH_3)_2(CH_2)_3OH$$

hat, auf 50°C abgekühlt hat, wird es mit 100 g säurebehandeltem Montmorrillonit, 432 g (6 Mol) Acrylsäure und 0,65g Bis-(tert.-Butyl)-kresol (als Mittel zur Verhinderung der Polymerisation der Acrylsäure) vermischt. Die so erhaltene Mischung wird 2 Stunden auf 110°C erwärmt. Anschließend wird vom Montmorillonit abfiltriert. nachdem aus dem Filtrat die bis zu 80°C bei 130 Pa (abs.) siedenden Stoffe abdestilliert wurden, werden 860 g (90,6 Gewichtsprozent d.Th.) eines schwach gelblichen, klaren Öls erhalten, das aufgrund des Kernresonanzspktrums die Formel

$$H_2C = CHCOO(CH_2)_3Si(CH_3)_2O[Si(CH_3)_2O]_9Si(CH_3)_2OOCHC = CH_2$$

hat.

D) Eine Mischung aus 1147 g des in den endständigen Einheiten je eine Si-gebundene Hydroxylgruppe · aufweisenden Dimethylpolysiloxans mit durchschnittlich 100 Si-Atomen je Molekül, 50 g des Organopolysiloxans mit Acryloxypropylgruppen in den endständigen Einheiten, dessen Herstellung vorstehend unter C) beschrieben wurde, und 240 g Toluol wird nach Vermischen mit 0,6 ml der 25-gewichtsprozentigen Lösung von Phosphornitridchloriden in Methylenchlorid 2 Stunden zum Sieden unter Rückfluß erwärmt. Das dabei gebildete Wasser wird in einer Dean-Stark-Falle aufgefangen. Dann werden die Phosphornitridchloride durch Zugabe von 1,4 ml Triisononylamin unwirksam gemacht. Danach wird die Lösung mit Hilfe von Aktivkohle und Diatomeenerde filtriert und aus dem Filtrat werden die bis zu 80°C bei 100 Pa (abs.) siedenden Bestandteile abdestilliert. Das in einer Ausbeute von 1150 g (96 Gew.-% d.Th.) erhaltene klare, farblose Öl hat eine Viskosität von 1000 mPa.s bei 25°C. Es enthält aufgrund des Kernresonanzspektrums durchschnittlich 300 Dimethylsiloxaneinheiten und 2 Acryloxypropylgruppen je Molekül.

E) Die vorstehend unter D) beschriebene Arbeitsweise wird wiederholt mit folgenden Abänderungen:
Anstelle der 1147 g des in den endständigen Einheiten je eine Si-gebundene Hydroxylgruppe aufweisenden Dimethylpolysiloxans werden 1040 g dieses Dimethylpolysiloxans verwendet.
Anstelle der 50 g des Organopolysiloxans mit Acryloxygruppen in den endständigen Einheiten, dessen Herstellung oben unter C) beschrieben wurde, werden 33 g dieses Organopolysiloxans verwendet. Anstelle der 240 g Toluol werden 200 g Toluol und anstelle der 0,6 ml der 25-gewichtsprozentigen Lösung von Phosphornitridchloriden werden 0,45 ml dieser Lösung verwendet.
Das in einer Ausbeute von 976 g (91 Gewichtsprozent d.Th.) erhaltene farblose, klare Öl hat eine Viskosität von 5800 mPa.s bei 25°C. Es enthält aufgrund des Kernresonanzspektrums durchschnittlich 520 Dimethylsiloxaneinheiten und 2 Acryloxypropylgruppen je Molekül.

Beispiele 1 bis 7 und Vergleichsversuche a und b

In einem Laborkneter werden die in der folgenden Tabelle angegebenen Stoffe sowie 2 Gewichtsprozent 2-Hydroxy-2-methyl-1-phenylpropan-1-on, bezogen auf das Gesamtgewicht der jeweiligen Mischung, miteinander vermischt.
Die so erhaltenen Massen werden in flache Formen mit einer Tiefe von 2 mm bzw. 6 mm gegossen. Die Formen werden mit Fensterglas mit einer Dicke von 2 mm bedeckt, um Elastomer mit glatter Oberfläche zu erhalten, und der Inhalt der Formen wird durch das Fensterglas in einem Abstand von 10 cm mit einem handelsüblichen Ultraviolett-Licht-Gerät ("Beltrolux", wobei es sich bei dieser Bezeichnung um ein Registriertes Warenzeichen handeln dürfte, der Firma Beltron GmbH, D-6074 Rödermark) 10 Sekunden bei den Formen mit einer Tiefe von 2 mm und 20 Sekunden bei den tiefen Formen bestrahlen. In der folgenden Tablele sind auch Werte, die bei physikalischen Prüfungen der so erhaltenen Folien erhalten werden, angegeben.

# T a b e l l e

| Beispiel bzw. Ver-gleichs-versuch | Organopolysiloxan hergestellt gemäß | | | | | Siliciumdioxyd | | Farb-stoff | Werte erhalten bei physikalischen Prüfverfahren | | | |
|---|---|---|---|---|---|---|---|---|---|---|---|---|
| | A) Gew.-% | B) Gew.-% | C) Gew.-% | D) Gew.-% | E) Gew.-% | 1) Gew.-% | 2) Gew.-% | | Shore-A-Härte | 3) N/mm² | 4) % | 5) N/mm |
| 1 | 78 | 0 | 0 | 0 | 0 | 20 | 0 | 0 | 24 | 4,3 | 420 | 10,0 |
| 2 | 78 | 0 | 0 | 0 | 0 | 0 | 20 | 0 | 22 | 3,9 | 500 | 8,7 |
| 3 | 77 | 0 | 1 | 0 | 0 | 20 | 0 | 0 | 24 | 3,7 | 410 | 21,2 |
| 4 | 77 | 0 | 1 | 0 | 0 | 20 | 0 | 6) | 18 | 3,8 | 490 | 27,9 |
| 5 | 65 | 0 | 1 | 0 | 0 | 32 | 0 | 6) | 30 | 5,8 | 510 | 36,2 |
| 6 | 0 | 15 | 0 | 63 | 0 | 20 | 0 | 0 | 36 | 3,5 | 200 | 8,3 |
| 7 | 77 | 0 | 1 | 0 | 0 | 20 | 0 | 7) | 22 | 3,0 | 390 | 29,6 |
| a | 0 | 0 | 0 | 78 | 0 | 20 | 0 | 0 | 20 | 3,0 | 230 | 4,2 |
| b | 0 | 0 | 0 | 0 | 78 | 20 | 0 | 0 | 10 | 1,9 | 600 | 4,5 |

Erläuterungen zur Tabelle:

1) mit Hexamethyldisilazan hydrophobiertes, pyrogen erzeugtes Siliciumdioxyd mit einer BET-Oberfläche von 300 m²/g

2) mit Hexamethyldisilazan hydrophobiertes, pyrogen erzeugtes Siliciumdioxyd mit einer BET-Oberfläche von 200 m²/g

3) Reißfestigkeit

4) Reißdehnung

5) Weiterreißwiderstand

6) 50 Gewichts-ppm, bezogen auf das Gesamtgewicht der übrigen Bestandteile, Nitrazingelb

7) 50 Gewichts-ppm, bezogen auf das Gesamtgewicht der übrigen Bestandteile, Nilblau A

## Ansprüche

1. Durch Strahlung zu Elastomeren vernetzbare Massen auf Grundlage von a) Organopolysiloxan mt Triorganosiloxaneinheiten der Formel

$$H_2C = CHCXOR^1SiR_2O_{1/2},$$

worin R gleiche oder verschiedene, einwertige Kohlenwasserstoffreste, die halogeniert sein können, $R^1$ gleiche oder verschiedene, zweiwertige Kohlenwasserstoffreste, die halogeniert sein können, und X Sauerstoff oder Schwefel bedeutet, während die anderen Siloxaneinheiten als diese Triorganosiloxaneinheiten mindestens zu 80 % ihrer Anzahl Diorganosiloxaneinheiten sind, deren SiC-gebundenen organischen Reste beide einwertige Kohlenwasserstoffreste sind, die halogeniert sein können, (b) Füllstoff mit einer Spezifischen Oberfläche von mindestens 50 m²/g und gegebenenfalls (c) Photoinitiator,
**dadurch gekennzeichnet,**
daß Organopolysiloxan (a) zusätzlich zu den vorstehend genannten Siloxaneinheiten auch Siloxaneinheiten der Formel

$$HSR^1SiRO,$$

worin R und $R^1$ jeweils die oben dafür angegebene Bedeutung haben, enthält.

2. Massen nach Anspruch 1,
**dadurch gekennzeichnet,**
daß sie 0,1 bis 0,9 Siloxaneinheiten der Formel

$$HSR^1SiRO,$$

worin R und $R^1$ jeweils die in Anspruch 1 dafür angegebene Bedeutung haben, je Rest der Formel

$$H_2C = CHCXOR^1-,$$

enthalten.

3. Massen nach Anspruch 1,
**dadurch gekennzeichnet,**
daß sie als Organopolysiloxane (a) solche der Formel (I)

$$H_2C = CHCXOR^1SiR_2O(SiR_2O)_m(HSR^1SiRO)_n(SiRR^2O)_pSiR_2R^1OXCHC = CH_2,$$

worin R, $R^1$ und X jeweils die in Anspruch 1 dafür angegebene Bedeutung haben, $R^2$ Wasserstoff oder einen Rest der Formel

$$H_2C = CHCXOR^1-,$$

worin $R^1$ die in Anspruch 1 dafür angegebene Bedeutung hat, bedeutet, m eine ganze Zahl im Wert von mindestens 1 ist und die Summe von m + n + p eine Zahl ist, die einer durchschnittlichen Vskosität vom Organopolysiloxan (a) von 10 mm².s⁻¹ bei 25°C bis 50 000 mPa.s bei 25°C entspricht, mit den Maßgaben, daß m mindestens 80 % der Summe von m + n + p beträgt und daß durchschnittlich 0,1 bis 5 Siloxaneinheiten der Formel

$$HSR^1SiRO$$

je Rest der Formel

$$H_2C = CHCXOR^1-$$

vorliegen.

4. Massen nach mindestens einem der Ansprüche 1 bis 3,
**dadurch gekennzeichnet,**
daß X Sauerstoff ist.

5. Massen nach mindestens einem der Ansprüche 1 bis 4,
**dadurch gekennzeichnet,**
daß sie Füllstoff mit einer Spezifischen Oberfläche von mindestens 50 m²/g in Mengen von 5 bis 50 Gewichtsprozent, bezogen auf das Gesamtgewicht der jeweiligen Masse, enthalten.

6. Massen nach mindestens einem der Ansprüche 1 bis 5,
**dadurch gekennzeichnet,**
daß sie zusätzlich zu Organopolysiloxan (a), Füllstoff mit einer Spezifischen Oberfläche von mindestens 50 m²/g (b) und Photoinitiator (c) organischen Farbstoff mit einem Absorptionsmaximum im Bereich von 300 bis 800 nm enthalten.

7. Massen nach mindestens einem der Ansprüche 3 bis 6,
**dadurch gekennzeichnet,**
daß sie zusätzlich zu Organopolysiloxan (a), Füllstoff mit einer Spezifischen Oberfläche von mindestens 50 m²/g (b) und Photoinitiator (c) Organopolysiloxan der Formel (I), worin jedoch m eine ganze Zahl von 0 bis 9 ist, enthalten.